(19) **Europäisches Patentamt / European Patent Office / Office européen des brevets**

(11) **EP 4 601 143 A1**

(12) **EUROPEAN PATENT APPLICATION**

(43) Date of publication:
**13.08.2025 Bulletin 2025/33**

(51) International Patent Classification (IPC):
**H02J 3/00** *(2006.01)*    **G06Q 50/06** *(2024.01)*
**H02J 13/00** *(2006.01)*

(21) Application number: **24156871.6**

(22) Date of filing: **09.02.2024**

(52) Cooperative Patent Classification (CPC):
**H02J 13/00001; G06F 17/16; G06F 30/20;**
**G06Q 50/06; H02J 3/00;** G06F 30/27;
G06F 2111/10; G06F 2113/04; H02J 2203/20

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **ABB SCHWEIZ AG**
**5400 Baden (CH)**

(72) Inventors:
• **AL-HOKAYEM, Peter**
**5415 Nussbaumen (CH)**

• **BERTOLDI, Federico**
**5415 Nussbaumen (CH)**
• **MITROVA, Sofija**
**5200 Brugg (CH)**
• **MASTELLONE, Silvia**
**5415 Nussbaumen (CH)**
• **REZAEIZADEH, Amin**
**5210 Windisch (CH)**

(74) Representative: **Zimmermann & Partner**
**Patentanwälte mbB**
**Postfach 330 920**
**80069 München (DE)**

(54) **METHOD FOR ESTIMATING A DYNAMICAL MODEL OF A POWER GRID, AND GRID-CONNECTED POWER CONVERTER FOR SAME**

(57) A method (100) of estimating a dynamical model of a power grid (10) is provided. The method comprises determining (106) a characteristic matrix from input data, the characteristic matrix representing the system dynamics of the grid (10) and having a rank r; performing (108) a singular value decomposition, SVD, on the characteristic matrix, thereby identifying an order q<r of the dynamical model; and representing (110) the dynamical model by a dynamical model function with a number p of model coefficients being dependent on q.

Fig. 2c

EP 4 601 143 A1

**Description**

TECHNICAL FIELD

Embodiments of the present disclosure relate to a method of estimating a dynamical model of a power grid. Embodiments of the present disclosure also relate to a method of controlling a grid-connected power converter, and to a grid-connected power converter.

BACKGROUND

In the field of electrical power generation and transmission, the management of power flow and energy storage is essential to the stability of a power grid. The grid is typically a vast network that generates and delivers electricity to end users via a medium voltage (MV) drive connected to the grid. With the increasing integration of intermittent renewable energy sources and advanced power electronics, the grid is facing new challenges that can affect stability and frequency predictability. While these elements are essential to modern energy needs, they introduce variability and complexity into the dynamics of the grid. Addressing these issues is critical to maintaining efficient and stable grid operations in the context of rapid technological advances.

Grid-connected power converters (used, for example, in MV drives for driving a variety of machines and processes) have a controllable power flow and energy storage. The power converter of a MV drive can be thought of as absorbing power from a three-phase AC power source - the grid, storing this power as energy in DC form using capacitors or inductors, and finally converting this stored energy back to AC form and driving an electric machine. In addition, this power flow can be reversed for example when we are harvesting wind energy, i.e., the wind turbine converts the mechanical power to electric one, this in turn is rectified and stored, and finally the stored DC energy is inverted and fed back to the grid in an AC form. Also, alternating this power flow at least at the rectifier side or the inverter side is also possible for short periods of time to allow extra controllability of the drive.

This control may stabilize or destabilize the grid. In order to achieve a beneficial control and positive effect on grid stability, it is important to have a control scheme that appropriately models the grid and is therefore based on an at least approximately correct understanding of the grid.

TERMS AND DEFINITIONS

This application uses terms that are briefly explained below.

In this document, "or" is understood as a non-exclusive disjunction. Thus, the expression "A or B" means that at least one of the statements A, B involved is true. Alternatively, the expression "A or B" is understood as an explanation of feature A by feature B.

The punctuation mark "/" (slash) is understood as "or".

The terms "substantially", "basically" or "about" as used herein typically imply that there may be a certain deviation, e.g. up to 1%, up to 3% or up to 10%, from the characteristic denoted with " substantially", "basically" or "about".

SUMMARY

In view of the above, a method of estimating a dynamical model of a power grid according to claim 1, a method (120) of controlling a grid-connected power converter according to claim 13, and a grid-connected power converter according to claim 14 are provided.

According to an apect, a method of estimating a dynamical model of a power grid is provided. The method comprises determining a characteristic matrix from input data, the characteristic matrix representing the system dynamics of the grid and having a rank r; performing a singular value decomposition, SVD, on the characteristic matrix, thereby identifying an order $q<r$ of the dynamical model; and representing the dynamical model by a dynamical model function with a number p of model coefficients being dependent on q.

The estimation may in particular enable reliable and stable operation of the grid-connected power converter, which is particularly beneficial in scenarios where the dynamics of the grid are altered due to the integration of renewable energy sources and power electronics.

The method may be an at least partially computer implemented method. The power grid may comprise at least one power plant that generates electrical energy and a network of electrical transmission and distribution lines, substations and/or transformers that are designed to deliver electricity from the power plant, in particular via a drive, to consumers, such as homes and/or businesses, in order to ensure a continuous and reliable supply of electrical energy. The grid may also have decentralized and/or fluctuating power sources.

The dynamical model is a mathematical representation that describes the relationship between an input signal, such as voltage or current, and the corresponding output signal at a given point in the grid (e.g., at the point of common coupling, PCC, of the grid-connected converter). The dynamical model essentially captures how the components and dynamics of the grid affect the transmission of electrical signals through the network. The dynamical model can be expressed by a dynamical model function representing this dynamic response of the grid to an input. The dynamical model may be expressed, for example, in terms of an impedance (possibly an expressing a dynamic response, e.g., by a transfer function) of the grid. The dynamic model may relate an input at one or more point(s) of the grid to a response at the same and/or different point(s) of the grid. The point(s) may be or include the point of common coupling, PCC, of the grid-connected power converter, and/or may optionally include other points. Specifically, the dynamical model of the power grid may express a relationship between voltage and current at the point of common coupling, PCC, specifically by correlating changes in voltage with corresponding variations in current.

Accurate modelling of the dynamical model allows the behaviour of the grid / network to be determined in response to various technical and environmental inputs, which is useful for efficient control and operational stability of the grid and of grid-connected components such as a grid-connected converter.

The method comprises the step of acquiring time domain input data including electrical signals from the grid during grid operation. Time domain input data refers to measured electrical signals that may vary over time as a function of grid processes. The data comprises the raw information needed to analyse the behaviour of the grid under operational conditions. The time domain input data is preferably acquired at the PCC.

The method further comprises the step of processing the time domain input data, thereby obtaining processed input data from the time domain input data. The processing may include frequency filtering, such as isolating certain frequency components from the time domain data and/or removing or focusing on certain frequencies or frequency ranges. This filtering step may possibly be performed after the Fourier-transforming to frequency domain. This filtering step allows the data to be prepared for more accurate analysis by reducing the data volume, focusing on relevant frequencies that affect grid performance, and bringing the input data into a useful format for determining an appropriate model function (e.g., into a format corresponding to an output of the dynamical model function), making the analysis more efficient.

The method further comprises the step of determining a characteristic matrix from the processed input data, the characteristic matrix representing the system dynamics of the grid and having a rank r. The characteristic matrix is a mathematical construct that encapsulates the essential features of the dynamics of the grid based on the processed input data. The characteristic matrix is preferably a Hankel matrix, and may be a square matrix. The rank r of the characteristic matrix is a fundamental property that indicates the dimensionality or the number of independent rows or columns in the matrix. This step provides a structured representation of the grid dynamics that can be analysed mathematically.

The method further comprises the step of performing a singular value decomposition, SVD, on the characteristic matrix, thereby identifying an order $q<r$ of the dynamical model. SVD is a statistical method used to decompose a matrix into its basic components. The order q represents the degree, order or complexity of the dynamical model. This step allows further refinement of the model of the behaviour of the grid by identifying the most significant aspects, such as the order of the dynamical model, for an accurate representation.

The method further comprises the step of representing the dynamical model by a dynamical model function with a number p of model coefficients being dependent on q (typically being identical or linearly growing with q). For example, the dynamical model function may have a numerator and a denominator which are polynomials of order p 1 and p2 (and having respective model coefficients being the polynomial coefficients), respectively, wherein p1 and p2 are dependent on q. In an example, the dynamical model function may be a fraction with a numerator and a denominator which are one or both polynomials of order q. Said polynomials are characterised by their coefficients. This step allows the behaviour of the grid to be described mathematically in a clear form that can be used for analysis and prediction of grid variables and/or behaviour.

The method further comprises the step of estimating the model coefficients of the dynamical model function by means of an adaptive algorithm. The adaptive algorithm is a computational method that dynamically adjusts parameters (the coefficients of the model function) based on the available data or conditions. The adaptive algorithm is based on the processed input data, and may be configured for minimizing a deviation between the (processed) input data and an output of the dynamic model function. This step allows the model of grid behaviour to be fine-tuned, ensuring that it accurately reflects the real-world dynamics of the grid. This enables improved prediction and analysis of the grid and control of the grid-connected converter.

The parameters comprising the order and the coefficients of the dynamical model at least partially determine the dynamical model of the power grid, and may be used for understanding the type of grid (e.g., whether the grid is an RL type, LCL type, or other type grid).

The method comprises features that represent an interaction with an external physical reality, thereby providing a technical effect related to that interaction. It interacts with the external physical reality at least a) at the input, based on the acquisition of time domain input data including electrical signals from the grid, and b) at the output, based on outputting the coefficients of the dynamical model obtained by the method for use in the external physical reality. This understanding may be used, e.g., to control the grid-connected power converter and/or other grid-connected components such as a power generator.

According to another aspect of the present disclosure, a method of controlling a grid-connected power converter is provided. The method comprises estimating a dynamical model of a power grid by an estimation method as described herein, and controlling the grid-connected power converter based on at least the results obtained by the estimation method (i.e., based on the determined dynamical grid model function, and specifically on its coeffients).

According to another aspect of the present disclosure, a computer program embodied on a transitory or non-transitory computer-readable medium is provided. The program is configured to cause at least one processor to execute the method of estimating a dynamical model of a power grid and/or the method of controlling a grid-connected power converter as described herein.

According to another aspect of the present disclosure, a grid-connected power converter is provided. The grid-connected power converter comprises a) a data acquisition unit adapted to acquire time domain input data, including electrical signals from the grid during grid operation; and b) a processor unit. The processor unit is adapted to estimate a dynamical model of the power grid by any method described herein. The processor unit is further adapted to control the grid-connected power converter based on the determined dynamical model function.

Some possible advantages relating to the method of estimating a dynamical model of a power grid, the grid-connected power converter and the grid-connected power converter are described as follows.

An advantage of accurately estimating the dynamical model of a power system is an enhanced analytical capability that facilitates prediction of grid variables and behaviour in response to various inputs and conditions. This may allow for improved stability and efficiency in the operation of the network.

An advantage based on the use of a characteristic matrix to represent the system dynamics, followed by SVD, allows the dynamics of the grid to be understood in terms of its most influential components appropriately describing the grid dynamics. Thereby, it becomes possible to establish a simple yet reliable model of the grid, simplifying the complex data into a more concise form. This makes the analysis more efficient while still capturing the essential dynamics of the grid. This also allows understanding the essential character of the grid and its dominant dynamic behaviour.

An advantage based on the use of an adaptive algorithm to estimate the coefficients of the dynamical model is that the model is responsive to the actual grid conditions (as expressed by the input data). This adaptability ensures that the model is accurate.

Overall, by providing an accurate and dynamic representation of grid behaviour, the claimed concept contributes to improving operational stability and efficiency of a power grid. It allows potential problems to be anticipated and mitigated, performance of both the grid and a grid-connected converter to be improved, even as new technologies and renewable energy sources are integrated.

Further aspects, advantages and features of the present disclosure are apparent from the dependent claims, the description and the accompanying drawings.

BRIEF DESCRIPTION OF THE DRAWINGS

So that the manner in which the above recited features of the present disclosure can be understood in detail, a more particular description of the present disclosure, briefly summarized above, may be had by reference to typical embodiments. The accompanying drawings relate to embodiments of the present disclosure and are described in the following:

Figs. 1a-1c show symbolic diagrams of a) a medium voltage drive, and b), c) of an impedance measurement and estimation configuration;

Figs. 2a, 2b show symbolic diagrams of a power grid and of a grid-connected power converter, according to embodiments described herein;

Figs. 2c, 2d show flow charts of c) a method for estimating a dynamical model of a power grid, and d) a method for controlling a grid-connected power converter, according to embodiments described herein;

Fig. 3 shows a flow chart of a method of estimating a dynamical model of a power grid, according to embodiments described herein;

Figs. 4a, 4b show a) a bar chart or the singular values obtained by means of SVD, and b) a graphical representation of null-space crossings, according to embodiments described herein;

Figs. 5a-5c show graphs illustrating results for a grid impedance estimation including a) the information content of frequency components for an LCL-type network impedance estimation, b) the frequency dependency of estimated polynomial coefficients, and c) the frequency dependency of an estimated dynamical model, according to embodiments described herein; and

Figs. 6a, 6b show graphs illustrating estimation results of R and L with +- 3*sigma borders, according to embodiments described herein.

DETAILED DESCRIPTION OF EMBODIMENTS

Reference will now be made in detail to the various embodiments, one or more examples of which are illustrated in each figure. Each example is provided by way of explanation and is not meant as a limitation. For example, features illustrated or described as part of one embodiment can be used on or in conjunction with any other embodiment to yield yet a further embodiment. It is intended that the present disclosure includes such modifications and variations.

Within the following description of the drawings, the same reference numbers refer to the same or to similar components. Generally, only the differences with respect to the individual embodiments are described.

The reference numbers of the figures are used merely for illustration. The aspects of the invention are not limited to any particular embodiment. Instead, any aspect or embodiment described herein can be combined with any other aspect or embodiment described herein unless specified otherwise.

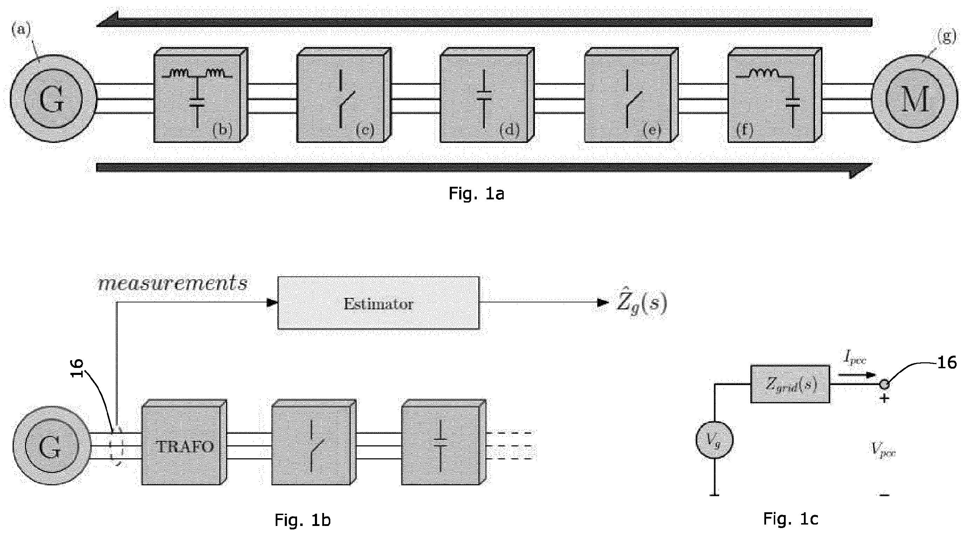

Fig. 1a shows a symbolic diagram of a medium voltage drive, and Figs. 1b, 1c show symbolic diagrams of impedance measurement and estimation configurations.

A medium voltage, MV, drive (b)-(f) as shown in Fig. 1a is a power/frequency converter used in a wide range of industries to drive various machines and processes. The basic features of the power converter (b)-(f) are power flow and energy storage. Traditionally, the power converter can be thought of as taking power from a three-phase alternating current, AC, power plant of a grid (a), transforming the power by means of a transformer (b), switches (c), (e) to safely connect / disconnect the power flow, storage devices (d) to store the power as direct current, DC, energy, e.g. by means of capacitors or inductors, and finally converting this stored energy back to AC by means of a DC/AC converter (f) and driving an electrical device (g).

The power flow can be reversed (see forward/backward arrows at the top/bottom of Fig. 1a symbolizing the power flow), for example when producing wind power, i.e. the wind turbine converts the mechanical power into electrical power, which is in turn rectified and stored, and finally the stored DC power is inverted and fed back into the grid 10 in AC form. It is also possible to reverse this power flow, at least on the rectifier or inverter side, for short periods of time to provide additional controllability of the drive.

Power electronics plays a vital role in the field of electrical power conversion, enabling a wide range of applications in various industries such as mobility, renewable energy, oil and gas, and power generation. There are three key components to a power conversion setup. The first is the power system with transformer and input/output filter, the second is the power converter with motor or generator and the third is the load. The use of power electronics increases efficiency and productivity, but also brings stability challenges. Increased integration of renewable energy sources and power electronics alters the dynamics of the grid, causing changes in frequency and unpredictability. Such problems may be mitigated by enabling inverters 18 to estimate the grid impedance 12 and by incorporating grid impedance estimation technology into their control loop. This may improve controller performance, transient and steady state conditions.

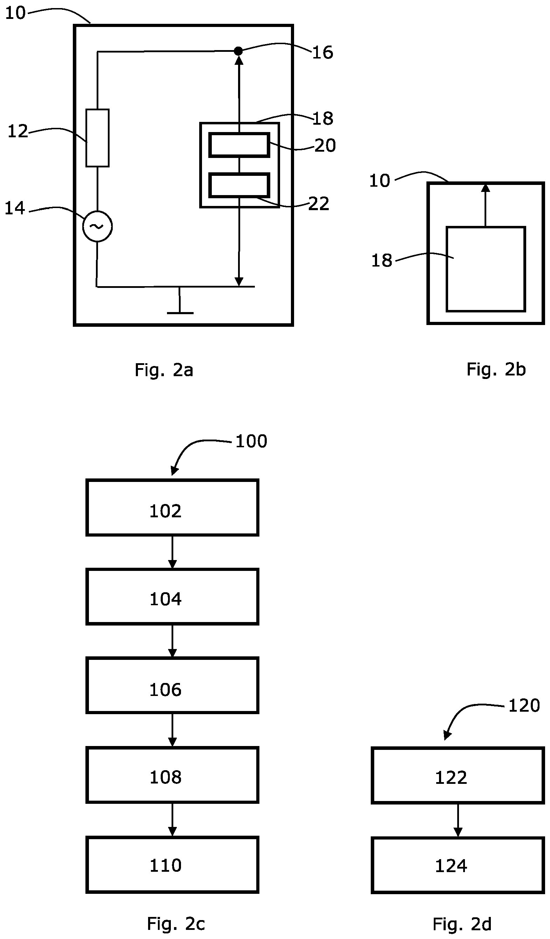

Figs. 2a, 2b show symbolic diagrams of a) a power grid with a grid-connected power converter, and b) a grid-connected power converter. Figs. 2c, 2d show flow charts of c) a method for estimating a dynamical model of a power grid, and d) a method for controlling a grid-connected power converter, according to embodiments of the present invention. Details explained with illustrative reference to Figs. 2a-2d shall not be understood as limited to the elements of Figs. 2a-2d. Rather, those details may also be combined with further embodiments explained with illustrative reference to the other figures.

The power grid 10 with grid-connected power converter 18 shown in Fig. 2a comprises:

a) a data acquisition unit 20 adapted to acquire 102 time domain input data, including electrical signals from the grid 10 during grid operation; and
b) a processor unit 22.

The processor unit 22 is adapted for:

a) acquiring 102 time domain input data including electrical signals from the grid 10 during grid 10 operation;
b) processing 104 the time domain input data, thereby obtaining processed input data from the time domain input data;
c1) determining 106 a characteristic matrix from the processed input data, the characteristic matrix representing the system dynamics of the grid 10 and having a rank r;

c2) performing 108 a singular value decomposition, SVD, on the characteristic matrix, thereby identifying an order q<r of the dynamical model;

d1) representing 110 the dynamical model by a dynamical model function with a number p of model coefficients being dependent on q; and

d2) estimating 112 the model coefficients of the dynamical model function by means of an adaptive algorithm based on the processed input data.

e) The processor unit 22 is further adapted to control 124 the grid-connected power converter 18 based on at least the coefficients of the dynamical model function 12.

The processor unit 22 is shown as belonging locally to the grid-connected power converter 18, and indeed it can be integrated with a local controller of the grid-connected power converter 18 (e.g., as an embedded system). However, the processor unit 22 or parts thereof may also be distributed, so that its operations, or parts thereof, may be carried out by a remote processor subunit connected via network, such as a PC or cloud device connected to the local components via a data network. Also, the estimation of the dynamical model of a power grid may be carried out in an online or in an offline manner.

According to embodiments described herein, the function of the processor unit 22 of controlling the grid-connected power converter 18 based on at least the coefficients of the dynamical model function 12 may include

- voltage control based on adjusting the operation of voltage regulating devices such as tap-changing transformers and/or voltage regulators, and/or
- frequency control based on adjusting power generation and/or demand by means of mechanisms such as load shedding or frequency dependent demand regulation, and/or
- reactive power control based on the adjustment of reactive power sources such as capacitor banks, and/or
- stability control based on predicting the behaviour of the grid in response to disturbances, enabling the controller to implement stability-enhancing measures such as rapid generation adjustments or load balancing.

The grid 10 shown in Fig. 2b comprises a grid-connected power converter 18 as described herein, and other components of the grid 10 (not shown in Fig. 2b) can be freely selected.

The method 100 shown in Fig. 2c of estimating a dynamical model of a power grid 10 comprises:

a) acquiring 102 time domain input data including electrical signals from the grid 10 during grid 10 operation;

b) processing 104 the time domain input data, thereby obtaining processed input data from the time domain input data;

c1) determining 106 a characteristic matrix from the processed input data, the characteristic matrix representing the system dynamics of the grid 10 and having a rank r;

c2) performing 108 a singular value decomposition, SVD, on the characteristic matrix, thereby identifying an order q<r of the dynamical model;

d1) representing 110 the dynamical model by a dynamical model function with a number p of model coefficients being dependent on q; and

d2) estimating 112 the model coefficients of the dynamical model function by means of an adaptive algorithm based on the processed input data.

The method 120 shown in Fig. 2d of controlling a grid-connected power converter 18 comprises estimating 122 a dynamical model of a power grid 10 by an estimation method 100, and controlling 124 the grid-connected power converter 18 based on at least the results obtained by the estimation method 100.

The concept of the grid-connected power converter and the method enables an accurate determination of the behaviour and characteristics of the power grid 10 by estimating its dynamical model, a mathematical representation that relates the input electrical signals to the output electrical signals. This is achieved by processing the electrical signals from the grid 10 to understand how the grid 10 will respond to various inputs and conditions. The concept uses time domain data conversion, frequency filtering, matrix analysis and adaptive algorithms to estimate the dynamical model, which provides a detailed understanding of the grid dynamics.

Acquisition of time domain input data can provide the raw electrical signal data required for analysis.

The processing 104 of time domain input data may include filtered the input data (possibly after a Fourier transform into frequency domain). This filtering can allow, for example, isolation of relevant frequencies for more focused and effective analysis, reducing complexity and computational load by focusing on significant frequencies, thereby improving efficiency. Specifically, the filtering can remove a frequency of the grid voltage and thereby simplify the analysis.

Determining a characteristic matrix can provide a comprehensive representation of the system dynamics of the network and allow detailed and specific analysis, and can improve the robustness and accuracy of the model by identifying and focusing on the most influential aspects of the network dynamics.

Representing the dynamical model by a model can provide a simplified yet accurate representation of the network behaviour for analysis and prediction, and facilitate effective understanding and control of the network behaviour in real time operation and/or in simulation / predictive analysis, forming the basis for real time control of the grid-connected power converter 18.

In this document, the term simulation refers to an at least partially computer-implemented method comprising features that represent an interaction with an external physical reality, thereby providing a technical effect related to that interaction. The method interacts with the external physical reality at least a) at the input, based on the acquisition of time domain input data including electrical signals from the grid, and b) at the output, based on the output of the coefficients of the dynamical model obtained by the method for further use, e.g. to control the grid-connected power converter and/or a power plant.

Estimation of coefficients by an adaptive algorithm can enable the model to remain accurate over time by adapting to changes in grid behaviour that may be due to ageing infrastructure, changing load patterns or the integration of renewable energy sources.

Taken together, the approach provides a systematic and efficient tool for understanding, predicting and controlling the behaviour of a power grid 10. It enhances the ability to control and improve grid performance, stability and reliability, and to adapt to changes in energy demand or generation availability.

According to embodiments described herein, the dynamical model can be represented by a dynamical model function (e.g. including one or more polynomials). The dynamical model can be for example a state space model and/or a data-based model.

The dynamical model may express a relation between voltage and current at the PCC 16, specifically by correlating changes in voltage with corresponding changes in current. The dynamical model may, for example, be expressed as a transfer function such as any correlation function, or as a (complex) impedance. The dynamical model and the method described herein may allow the accuracy of the dynamical model estimation to be improved.

According to embodiments described herein, step a) may comprise acquiring the time domain data at a point of common coupling, PCC 16, which is preferably a location where users and/or power sources can connect to the grid 10. This allows for increased reliability of the data for dynamical model estimation as the PCC 16 provides a comprehensive merging point reflecting the overall grid behavior. The grid-connected power conversion unit may belong to a plurality of grid-connected power conversion units connected to the (same) PCC. The method may be applied to the plurality of grid-connected power conversion units connected to the PCC. There may be yet further grid-connected power conversion units connected to the PCC, to which the method is not necessarily applied, i.e., the above does not necessitate that the method is applied to each and every grid-connected power conversion unit connected to the PCC, although application to every grid-connected power conversion unit connected to the PCC is generally advantageous and preferred.

According to embodiments described herein, step b) may comprise using frequency filtered time domain data as the processed input data. In particular, the processed input data can be derived from the time domain data by applying frequency filtering techniques to eliminate or enhance some particular frequency components.

According to embodiments described herein, step b) of the estimation method may comprise transforming the input time domain data into frequency domain data. This may allow analysis of the grid dynamics by distinguishing different frequency components, which is critical for accurate dynamical model estimation.

According to embodiments described herein, step b) of the estimation method may comprise removing the fundamental frequency component (the grid frequency) from the frequency domain data. This may eliminate the shadowing effect of the fundamental frequency, thereby increasing the sensitivity of the analysis to frequency components that more substantially determine the power grid dynamics. The step b) may further comprise retaining a frequency range around at least one known resonant frequency of the grid.

According to embodiments described herein, step b) of the estimation method may include removing noise from the frequency domain data. This may relate to filtering out irrelevant or extraneous information from the frequency domain data to improve signal clarity. This may significantly improve the accuracy and reliability of the dynamical model estimation by focusing on the most relevant and informative aspects of the processed data.

According to embodiments described herein, step b) may comprise applying the Fourier transform to the time domain data, e.g. as a Discrete Fourier Transform, DFT, such as a Fast Fourier Transform, FFT. This enables frequency domain data to be obtained, particularly for subsequent analysis of the frequency domain data.

According to embodiments described herein step b) may comprise determining a set of frequency intervals for analysis of the frequency domain data, and excluding frequencies outside this range from the analysis of the frequency domain data. This range is critical for identifying resonant frequencies and impedance characteristics of the grid 10, thereby enabling increased accuracy and efficiency in grid dynamics analysis and/or reducing computational complexity and noise.

According to embodiments described herein, step b) may comprise evaluating the contribution of respective frequency components (of the processed input data), e.g., evaluating the contribution of each frequency component, to the estimation of the grid parameters by determining the magnitude and phase information of the frequency components and/or discarding frequency components that add little or no information to the estimation process. This allows for a more accurate estimation process by focusing on significant frequency components, thereby increasing the accuracy and computational efficiency of the grid analysis.

According to embodiments described herein, step b) of the estimation method may include determining the processed input data from the filtered data. In addition to the filtering, further processing steps may be performed for obtaining the processed input data, e.g., for facilitating the subsequent steps c) and d) to be carried out in an efficient manner. One example is a processing including the generation of dynamical model input data corresponding to an output of the dynamical function. In an example discussed in further detail below, step b) comprises processing the time domain input data ($I_{pcc}(s)$; $V_{pcc}(s)$) by forming a dynamical model input data corresponding to the dynamical model function being a network transfer function G. In this example, the dynamical model input data is brought, in Fourier space, to a form corresponding to the dynamical model function $G1(j\omega)$ using the relation $\hat{I}(j\omega)/\hat{V}(j\omega) \approx G1(j\omega)$. Thereafter, an inverse Fourier transform may be applied for obtaining the processed input data $h_k$. Further details are discussed in the example below.

According to embodiments described herein, step c1) comprises determining a characteristic matrix from the processed input data, the characteristic matrix representing the system dynamics of the grid. The rank of the characteristic matrix is referred to as r.

According to embodiments described herein, step c1) may comprise constructing the characteristic matrix such that its rows and/or columns are mutually shifted, in particular incrementally shifted with respect to each other. For example, each row or column may be a shifted version of the processed input data, thereby allowing the underlying system dynamics to be captured for analysis. This may comprise arranging the processed input data in a particular pattern within the characteristic matrix to enable effective and thorough analysis.

According to embodiments described herein, step c1) may comprise constructing the characteristic matrix as a Hankel matrix from the processed input data. In the specific example discussed further below, the characteristic matrix is determined as a Hankel matrix from the processed input data $h_k$.

The Hankel matrix can be formed by arranging the time series data so that each ascending diagonal from left to right contains elements of equal index sum, and each row is a shifted version of the previous row, moving one position to the right. The Hankel matrix can be used to capture the temporal dynamics of the system by representing the evolution of the state of the grid 10 over time, allowing patterns and relationships to be identified in the time series data.

According to embodiments described herein, step c2) of the estimation method may comprise obtaining the singular values of the characteristic matrix, which are key indicators of the properties of the matrix and the grid dynamics they represent. These indicators may provide access to the relevance of specific system dynamics and more accurate and effective grid analysis and dynamical model estimation.

According to embodiments described herein, step c2) may comprise determining, in particular by means of SVD, singular values of the truncated matrix which preferably is obtained from the processed input data. Advantageously, said singular values provide information on the states of the grid 10 and/or on the relevance of each state, in order to detect and retain the dominant states and to neglect the others. This may allow the efficiency of the impedance and resonance frequency estimation to be improved.

According to embodiments described herein, the most significant singular values of the characteristic matrix are values below a predefined threshold, preferably the threshold being 5% to 20% or 10% to 15% of the maximum singular value. A relatively small threshold, e.g. 5% or 10% of the maximum singular value, may result in a more accurate but less comprehensive capture of the grid dynamics. Conversely, a relatively large threshold, e.g. 15% or 20% of the maximum singular value, may include less significant data, potentially reducing the accuracy while improving the overall robustness of the model.

According to embodiments described herein, step c2) may comprise examining the singular values of the truncated matrix by means of a scree plot. This can make it possible to determine the number of significant singular values and/or to distinguish between informative states of the grid 10 and less significant or noise-related states and/or to enable model order selection.

According to embodiments described herein, step c2) may comprise determining the null spaces of the truncated matrix at different frequencies in order to obtain least squares solutions for the grid parameters. This may allow an accurate and reliable estimation of the grid impedance and resonant frequencies.

According to embodiments described herein, step c2) may comprise i) evaluating, in particular by means of SVD, less relevant contributions in the dynamical model estimation process, and in particular ii) eliminating these contributions. Preferably, this may allow focusing on the most relevant components of the time domain data, thereby enabling an efficient and accurate dynamical model representation.

According to embodiments described herein, step c2) of the estimation method may comprise (identifying and) retaining the most significant singular values of the characteristic matrix (e.g., as a set of r singular or diagonal values determined as the most significant ones); obtaining, from the characteristic matrix, a truncated matrix of reduced dimension q<r operating within a reduced space corresponding to the retained singular values. This may involve selecting the most informative singular values from the characteristic matrix.

This step c2) can improve the accuracy and efficiency of the dynamical model estimation, ensuring a more accurate analysis of the power grid dynamics. In particular, the SVD and the retaining of only q<r singular values allows discarding frequency components that add little or no information to the estimation process. Thereby, a simplified version of the dynamical model can be obtained that retains the most significant information while reducing complexity.

According to embodiments described herein, step d1) comprises representing the dynamical model by a dynamical model function with a number p of model coefficients being dependent on q. In particular, the number p of model coefficients may be determined as equal to q or in a manner linearly growing with q (e.g, p = 2*q-1).

According to embodiments described herein, in step d1) the dynamical function may include a first polynomial, and step d1) may comprise determining an order p1 of a first polynomial based on q, and the model coefficients including polynomial coefficients of the first polynomial.

According to embodiments described herein, in step d1) the dynamical function may include a second polynomial, and step d1) may comprise determining an order p2 of a second polynomial based on q, and the model coefficients including polynomial coefficients of the second polynomial. Preferably the first polynomial forms a numerator and the second polynomial forms a denominator of the dynamical model function.

According to embodiments described herein, step d1) may comprise selecting the dynamical model function from a plurality of predetermined candidate dynamical model functions (e.g., polynomials of order p based on the order q, or a fraction having its numerator and denominator defined by polynomials of respective order p1, p2 based on the order q).

According to embodiments described herein, step d1) may comprise splitting the dynamical model function into real and imaginary parts and estimating these parts.

According to embodiments described herein, step d1) may comprise determining the type of grid based on the order q and/or on the determined singular values. The type of grid may include candidate types such as RL and/or LCL-type grid.

According to embodiments described herein, step d1) may comprise selecting the dynamical grid model function from a set of candidate functions tailored to respective grid types (for example, RL and/or LCL-type grid impedance models) and optionally of selecting at least one specific frequency within a predetermined frequency range (where resonance occurs).

According to embodiments described herein, step d1) may comprise determining the feasibility of the impedance estimation by evaluating whether the number of informative frequencies is sufficient, which preferably addresses the ability to provide a complete and representative picture of the impedance characteristics of the grid 10 over the relevant frequency range. In particular, this may be done on the basis of a predefined threshold such as the signal-to-noise ratio and/or the magnitude of the frequency components. A threshold may also be based on a certain confidence level in the impedance estimation results, e.g. a 95% confidence interval, or a threshold for the correlation coefficient between the estimated impedance 12 and the observed grid behaviour. This can be used to determine whether the available data is sufficiently informative for accurate analysis.

According to embodiments described herein, step d2) of the estimation method may comprise estimating the coefficients of the dynamical model by iteratively updating the coefficients representing the relationship between the input and output signals of the grid 10, thereby adapting to temporal variations in the time domain data. This can improve the accuracy of the dynamical model estimation, thereby ensuring more reliable and accurate modelling of the grid behaviour in response to temporal signal variations.

According to embodiments described herein, step d2) may comprise estimating the coefficients of the dynamical model by a recursive least squares, RLS, method. This may include iteratively refining the coefficients of the dynamical model, thereby allowing dynamic adaptation to changing grid conditions without significant processing delays.

According to embodiments described herein, step d2) may comprise estimating the coefficients of the dynamical model by a gradient descend method.

By applying these or similar methods to the set of reduced parameters (p parameters defined by the order q of the system), the grid behaviour (e.g., impedance parameters) can be determined in a simple system in which represents the grid in a realistic manner and which can be understood and analyzed without overfitting (e.g., just using a reduced set of informative frequencies or resonances or other parameters determining the grid behaviour in a simple model).

According to embodiments described herein, step d2) may comprise estimating the polynomial coefficients of the grid dynamical model, separately for the real and imaginary parts, by means of the RLS method. By separately estimating the real and imaginary parts, complex grid behaviour and interactions can be accurately modelled.

According to embodiments described herein, step d2) may comprise applying the RLS method to the set of informative frequencies for estimating the model coefficients. In particular, this is based on the concept that certain frequencies provide more valuable information about the impedance characteristics of the grid 10 than others. This allows the influence of less relevant data to be reduced, thereby increasing the accuracy and relevance of the estimate.

According to embodiments described herein, step d2) may comprise using the RLS method to determine the polynomial coefficients for the grid impedance vector, GIV, which preferably may comprise splitting the dynamical model into real and imaginary parts and estimating these parts, thereby providing a detailed representation of the grid impedance characteristics over different frequencies. Preferably, the GIV is a vector representation of the grid impedance 12 which can encapsulate a wide range of grid characteristics such as phase angles, frequency dependent behaviour and non-linearities.

According to embodiments described herein, step d2) may comprise estimating the resonant frequency of the dynamical model by applying the RLS method to at least one significant frequency range, in particular to at least one range around at least one resonant frequency of the grid 10. By focusing the RLS method on these ranges, in particular around known resonant frequencies, the method can more accurately identify the resonant frequency of the dynamical model and/or allow effective measures to be designed to counteract potential resonance-related problems such as overvoltage or system instabilities.

According to embodiments described herein, step d2) may comprise applying a modified RLS method tailored to LCL-type grid impedance models 12 at a specific frequency range to estimate the resonant frequency, preferably by using prior knowledge of the frequency range where resonance occurs. The modified RLS method may be specifically tailored to LCL-type grid impedance models 12, and the modification may be expected to involve adjustments in the algorithm to better handle the characteristics of LCL filters, such as their resonance behaviour. The use of the modified RLS method tailored to LCL-type grid impedance models 12 may allow more accurate identification of resonance characteristics, thereby improving the accuracy and efficiency of resonant frequency estimation in grids 10 with LCL filters. In addition, the use of prior knowledge of the expected resonant frequency range may allow focused and efficient analysis and/or a reduction in the dimensionality of the parameter space, thereby simplifying the estimation process.

According to embodiments described herein, step d2) may comprise assessing the reliability of the parameter estimation using the condition number of the truncated matrix (possibly to measure the sensitivity of the matrix to changes in the input data, thereby assessing the stability of the estimation process). The condition number of the truncated matrix is a measure of the sensitivity of a matrix to changes in its input data and is used to assess how stable the parameter estimation is likely to be. A high condition number indicates that small changes in the input data can lead to large changes in the estimate, indicating potential instability or unreliability. Conversely, a lower condition number indicates that the estimate is more stable and reliable. This technique is particularly useful when working with matrices derived from real data, where precision and stability are essential. This can allow for reliable grid analysis, thereby increasing the robustness and credibility of the estimation process.

According to embodiments described herein, step d2) may comprise determining a confidence interval for the impedance parameter estimation in order to assess the reliability of the estimated parameters, the confidence interval indicating the deviation of each of the estimated parameters in the dynamical model from the mean, preferably based on determining a covariance matrix from the RLS method. Preferably, the confidence interval may be determined by constructing a covariance matrix from the results of the RLS method. The confidence interval may be derived from the covariance matrix, providing a statistical range within which the true value of each estimated parameter is likely to lie with a certain degree of probability. This can provide a quantitative measure of the reliability and precision of the estimates, allowing the risk and uncertainty associated with these estimates to be assessed, leading to robust and reliable grid operation strategies.

According to embodiments described herein, step d2) of the estimation method may be followed by outputting the model coefficients obtained in step d2) for further usage, e.g. for controlling the grid-connected power converter 18 and/or other grid-connected component(s) such as a power generator or load. This may enable the analysis to be applied in technical practice, facilitating more precise control and improvement of the grid 10 and generator operations based on the detailed information gained from the dynamical model estimation.

According to embodiments described herein, estimating the dynamical model may comprise evaluating grid responses over a range of frequencies and identifying frequency dependent characteristics of the grid 10, thereby providing a detailed frequency profile of the grid behaviour. In particular, in the context of the passive estimation technique of the invention, which preferably involves analysing measured data without actively influencing the grid behaviour, the grid response refers to analysing how the grid 10 reacts under different conditions, as observed in the collected data, rather than actively provoking a response. This may enable a comprehensive understanding of the behaviour of the grid 10 at different frequencies and a more accurate modelling and prediction of the grid behaviour, facilitating grid management and planning, particularly in addressing frequency-specific issues..

EXTENDED DESCRIPTION OF EMBODIMENTS

According to embodiments, the concept of the invention provides local measurements at a point of common coupling 16, PCC, while the grid parameters are unknown (see Figs. 1b, 1c). Based on the use of an estimation of the grid parameters in a converter control system, the controller can be better calibrated to detect faults and provide more reliable and stable operation. The estimation can be done by an active method, where an injection is made into the grid 10 to get more information, or by a passive technique, as used in the present concept, where the information from the normal operation of the converter is used. Within a measurement setup as shown in Fig. 1c, the present concept provides an accurate estimate of the network parameters and/or the frequencies at which resonances occur.

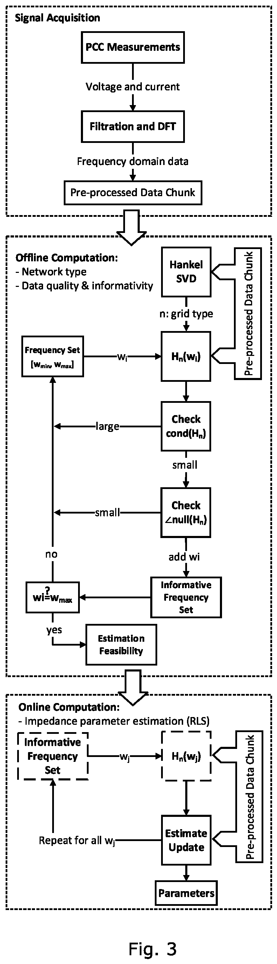

Fig. 3 shows a flow chart of the method of estimating a dynamical model of a power grid 10, according to embodiments of the present invention. Details explained with illustrative reference to Fig. 3 shall not be understood as limited to the elements of Fig. 3. Rather, those details may also be combined with further embodiments explained with illustrative reference to the other figures.

According to embodiments shown in Fig. 3, the concept of the invention can be applied to both the estimation of the network impedance 12 and the determination of the resonance frequencies. The estimation process can start with electrical signal measurements at the PCC side, mainly the PCC current(s) and voltage(s). The measurements are then pre-processed by software filter units, followed by a Discrete Fourier Transform (DFT) operation. The resulting frequency domain data can then be fed into a network identification unit where singular value decomposition is applied to a Hankel matrix to identify the impedance type, i.e. RL, LCL etc. Once the type is known, a linear model relating the unknown parameters to the measurements, i.e. e. $\hat{Z}g(j\omega)$, can be established.

The (generalised) condition number of the $H(\omega)$ matrix can be a useful measure of the reliability of the solution at the given frequency. If the condition number is large, the matrix is close to being singular and the corresponding frequency component is discarded. In addition, a data significance analysis can be performed on the data to evaluate the contribution of each frequency component to the estimation of the network parameters. Those frequency components that add little or no information are discarded. If the number of informative frequencies is less than a threshold, the problem is considered infeasible, i.e. the frequency content is not rich enough to perform the network impedance estimation; otherwise, the impedance estimation process is performed over the informative frequency set.

The present approach to the estimation problem is based on a recursive least squares (RLS) method, resulting in a computationally efficient solution. The RLS approach can also be applied to the resonant frequency estimation, but on a narrower frequency range and with a reduced approximated system model around the resonant frequency. This results in a faster computation of the resonance estimation, which is another novelty of the solution. All of the modules described can be run onboard an embedded system at a slower sampling rate than the controller and/or offline on a standalone computer.

In the network schematic shown in Fig. 1c, $Vpcc$ and $Ipcc$ are the PCC voltage and current of the converter, respectively, and Vg is the grid voltage. The relationship between the current $Ipcc$ and the voltages $Vpcc$ is given in the Laplace domain as follows

$$I_{pcc}(s) = \frac{A(s^3)}{B(s^4)}V_{pcc}(s) + \frac{ks}{B(s^4)}V_g(s)$$
$$= G_1(s)V_{pcc}(s) + G_2(s)V_g(s),$$

where $A(s^3)$ and $B(s^4)$ denote polynomials of order 3 and 4, respectively, and $k$ is a gain to make $B(s^4)$ a monic polynomial, i.e. with the highest degree coefficient equal to 1. Substituting s with $j\omega$ to convert the equation into the frequency domain, leads to

$$I_{pcc}(j\omega) = G_1(j\omega)V_{pcc}(j\omega) + G_2(j\omega)V_g(j\omega).$$

In order to estimate the network dynamical model $G1(j\omega)$ it is assumed that signals $Ipcc$ and $Vpcc$ are measured with a sampling-time $Ts$, and moreover, $Vg$ is assumed to be unknown but has a fixed frequency content at 50Hz / 60Hz only, and zero frequency content at all other frequencies. Therefore, an estimation of the dynamical model is given by

$$G_1(j\omega) \approx \frac{\hat{I}(j\omega)}{\hat{V}(j\omega)},$$

where $\hat{I}$ and $\hat{V}$ are, respectively, the discrete-Fourier transforms (DFT) of the signals (excluding the fundamental component).

The order of the system is very important in the setup not only because it gives information about the frequency content that would be valuable, but also it is important to know which algorithm needs to be used to determine the parameters since the algorithm is different for the first order and the fourth order grid 10.

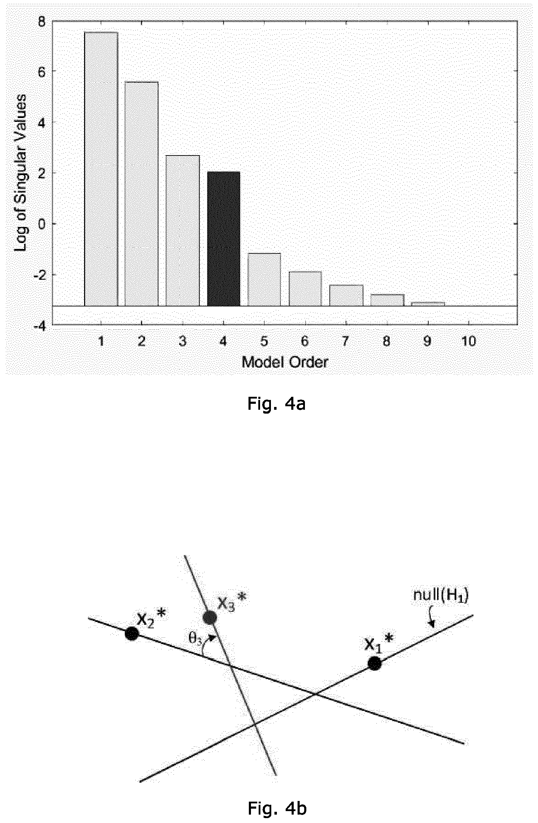

Figs. 4a, 4b show a) a bar chart or the singular values obtained by means of SVD, and b) a graphical representation of null-space crossings, according to embodiments of the present invention. Details explained with illustrative reference to Figs. 4a, 4b shall not be understood as limited to the elements of Figs. 4a, 4b. Rather, those details may also be combined with further embodiments explained with illustrative reference to the other figures.

Singular value decomposition (SVD) is a mathematical technique used to decompose a matrix into three separate matrices: the singular values, left singular vectors, and right singular vectors. SVD provides insights into the relationship between input and output signals in system identification. The singular values capture the magnitude and complexity of the system's dynamics, aiding in the identification of dominant poles and distinguishing them from noise. The left singular vectors reveal the input-output relationship assisting in input excitation design. The right singular vectors offer insight into output sensitivity, model structure identification, and model order estimation. By analysing these matrices, valuable information about the system's behaviour, input-output relationships, and model characteristics can be extracted, enabling the system identification process.

The Hankel matrix *(H)* is a key component in estimating the order of a dynamical model using SVD. It is formed by appropriately selecting rows and columns from the input and output signal matrices, respectively. The resulting matrix *H* captures the dynamics of the underlying system. The inverse Fourier transform of the dynamical model estimate is calculated as,

$$h_k = \frac{1}{N} \sum_{n=0}^{N-1} G(e^{j\omega_n}) e^{j2\pi kn/N}$$

The Hankel matrix is filled with the values of $h_k$. The value for *n* is the length of the samples for the current and voltage signals, and *r* is chosen to be greater than the system dimension.

$$H = \begin{bmatrix} h_1 & h_2 & h_3 & & h_r \\ h_2 & h_3 & & \dots & h_{r+1} \\ h_3 & & & & \vdots \\ \vdots & h_{r+1} & & \dots & h_{2r-1} \\ h_r & & & & \end{bmatrix}$$

The singular values of the Hankel matrix are calculated using singular value decomposition (SVD) and are plotted on a so-called scree plot. The scree plot provides insights into the number of dominant singular values and hence the order of the dynamical model, the decay of these singular values reveals valuable information about the number of dominant poles in the system. To estimate the dynamical model order accurately, the singular values obtained from SVD are typically sorted in descending order. The rate at which these singular values decay indicates the presence of dominant poles in the system. Sudden drops or plateaus in the singular value decay may indicate the existence of noise. This is the final stage where the order of the dynamical model is determined to establish the corresponding algorithm to be employed, e.g. for RL, LCL or higher order grid models.

Once the Hankel matrix is generated and the dominant singular values are calculated, it can be confirmed that the estimation is indeed for a fourth order LCL-type grid 10, see Fig. 4a.

Informativeness of a frequency component refers to how much value it adds to the estimation of the parameters. As previously defined, the relationship between measurements, *y,* and the parameter space, *x,* is given by the following linear equation,

$$y(\omega) = H(\omega)x.$$

Any x lying in the null-space of *H(ω)* has no effect on the measurements. In other words, if x* is the least-squares solution to the equation above, adding any vector to x that belongs to the null-space of H, is still a valid solution. More rigorously,

$$H\left(x^* + x_{nH}\right) = Hx^* = y,$$

where, $x_{nH} \in null(H)$ and $x^* = H^\dagger y$.

To have a numerically robust and precise estimation of x over a set of frequency points, the null-spaces of *H* at different frequencies, i.e. *null(H(cot)),* must cross one another. Since *H* is a 2 x n matrix, where *n* is the dimension of parameters, the null-space of *H* has order of n - 2. That is, the null-space is a hyperline in the parameter space. Fig. 4b graphically illustrates this concept: x*'s denote the least square solutions to $y(_{\omega i}) = H(\omega_i)x_i$, and lines represent the null-spaces of each frequency.

For a given frequency $\omega_l$, the minimum relative crossing angle in which the null-space of $H(\omega_l)$ crosses all other null-spaces can be calculated as

$$(\omega_i) = \min_{\omega_j} \angle\left(\text{null}(H_i), \text{null}\left(H_j\right)\right),$$

where $\angle$ denotes the principal angle between two subspaces. The larger the angle is (up to 90°), the more information is introduced by the new direction of $\text{null}(H(\omega_i))$.

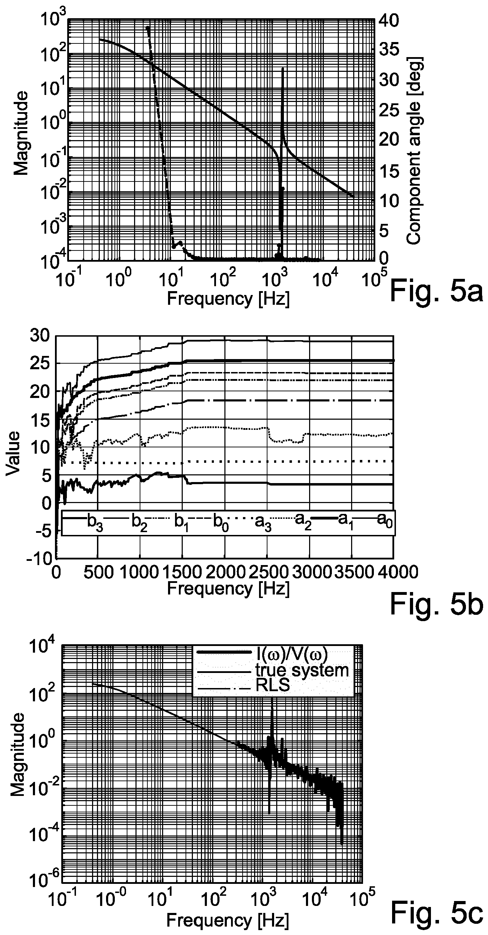

Figs. 5a-5c show graphs illustrating results for a grid impedance estimation including a) the information content of frequency components for an LCL-type network impedance estimation, b) the frequency dependency of estimated polynomial coefficients, and c) the frequency dependency of an estimated dynamical model, according to embodiments of the present invention. Details explained with illustrative reference to Figs. 5a-5c shall not be understood as limited to the elements of Figs. 5a-5c. Rather, those details may also be combined with further embodiments explained with illustrative reference to the other figures.

Fig. 5a shows the calculation result of informativeness of frequency components for the LCL-type grid impedance estimation. The red curve illustrates the subspace angle of each frequency with respect to all other frequencies, which can be interpreted as information richness of each frequency. According to the plot, lower frequency and resonance neighbourhood components have the main contribution towards the parameter estimation.

The recursive least square (RLS) method is applied for deriving the polynomial coefficients in Giv(co). The dynamical model is split in terms of the real and imaginary parts as follows

$$G_1(j\omega) = \frac{A(j\omega^3)}{B(j\omega^4)} \approx \frac{\hat{I}(j\omega)}{\hat{V}(j\omega)} = r_r(\omega) + jr_i(\omega)$$

or,

$$A\left(j\omega^3\right) = (r_r(\omega) + jr_i(\omega))\, B\left(j\omega^4\right)$$

where $A$ and $B$ are the numerator and denominator polynomials respectively, and $r_r$ and $r_i$ are the real and imaginary parts, respectively. Since the equation above is scale invariant, we assume that the polynomial $B$ is already monic, i.e. the highest degree coefficient is equal to 1. Therefore, we have

$$A\left(j\omega^3\right) = a_3(j\omega)^3 + a_2(j\omega)^2 + a_1(j\omega) + a_0 \qquad\qquad =$$

$$(r_r(\omega) + jr_i(\omega))\left((j\omega)^4 + b_3(j\omega)^3 + b_2(j\omega)^2 + b_1(j\omega) + b_0\right)$$

Introducing the parameter vector, x, which captures the polynomial coefficients of $A$ and B, leads to

$$\begin{pmatrix} r_r(\omega) \\ r_i(\omega) \end{pmatrix} = (1/\omega^4)\begin{pmatrix} -r_i\omega^3 & r_r\omega^2 & r_i\omega & -r_r & 0 & -\omega^2 & 0 & 1 \\ r_r\omega^3 & r_i\omega^2 & -r_r\omega & -r_i & -\omega^3 & 0 & \omega & 0 \end{pmatrix} x = :H(\omega)x.$$

were x is defined as

$$x := (b_3 \quad b_2 \quad b_1 \quad b_0 \quad a_3 \quad a_2 \quad a_1 \quad a_0)^T.$$

The equation above is now in the form of $y = Hx$ to be applied to the RLS algorithm, where $y$ and $H$ both depend on the frequency, whereas $x$ is a constant parameter vector.

The RLS algorithm runs from the DC frequency to the maximum frequency $\omega_{max}$ and recursively updates the parameter estimation vector x according to the following set of equations,

$$K = PH^T(HPH^T + R)^{-1},$$

$$\hat{x}_{new} = \hat{x} + K(y(\omega) - H(\omega)\hat{x}),$$

$$P = (I_8 - KH)P(I_8 - KH)^T + KRK^T.$$

Where $I_8$ is an 8x8 identity matrix.

The estimation process of the 8 polynomial coefficients as the frequency sweeps from DC to ω*max* shown in Fig. 5b illustrates the estimation result of the RLS method to estimate the dynamical model G1(ω). The estimated dynamical model fits in most of the frequency range, especially near the resonance region. The resonance frequency (the imaginary part of the complex conjugate poles) of the estimated system is off by nearly 0.5% of the actual frequency. Fig. 5c shows the obtained simulation results. The resulting curve of the estimated system ("RLS") is in excellent agreement with the true system. Indeed, in Fig. 5c all three curves overlap to such an extent that it is impossible to discriminate between the lines.

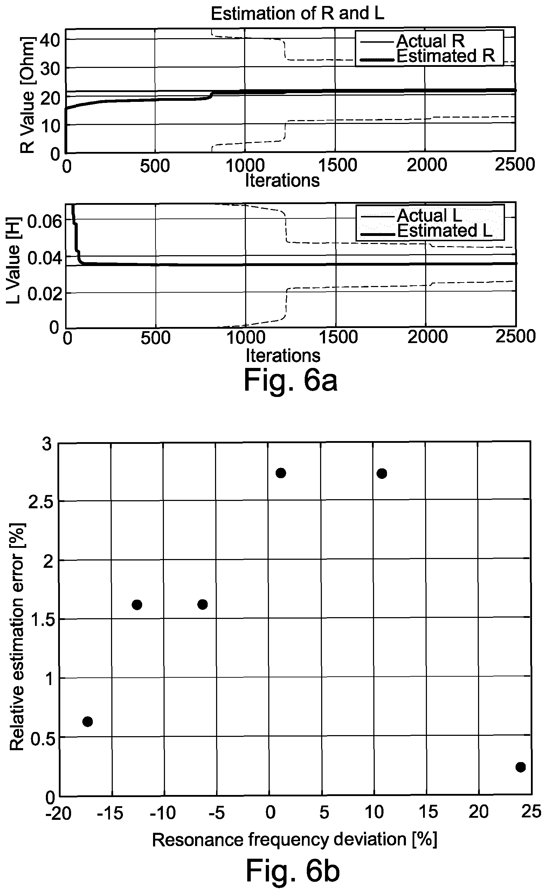

Figs. 6a, 6b show graphs illustrating estimation results of R and L with +- 3*sigma borders, according to embodiments of the present invention. Details explained with illustrative reference to Figs. 6a, 6b shall not be understood as limited to the elements of Figs. 6a, 6b. Rather, those details may also be combined with further embodiments explained with illustrative reference to the other figures.

The P covariance matrix from the least square algorithm is used to calculate sigma or the confidence interval. The matrix is updated in each iteration of the algorithm and once the final version is obtained it can be easy to determine how far off the estimate of the true parameters might be. This confidence interval sigma shows how certain and reliable the estimate of the true parameters falls within a certain range. The confidence intervals and the estimates of R and L are given in Fig. 6a.

As discussed above, the RLS method is employed to estimate the model coefficients (numerator and denominator coefficients) of the grid dynamical model. For the LCL-type grid impedance model 12, deriving the resonant frequency is carried out by finding the poles of the estimated dynamical model which requires to solve a 4th order polynomial. However, if there is prior knowledge of the frequency range in which the resonance occurs, the RLS method can be restricted to run only at a specific frequency range, so that the computation time would be significantly reduced.

Around the resonant frequency, the main contribution comes from the complex-conjugate poles, assuming the rest of the system dynamics to be approximately constant within this range. Therefore, at frequencies near the resonance, the dynamical model behaves as

$$G_1(j\omega) \approx \frac{c}{-\omega^2 - 2j\alpha\omega + \beta}$$

where c is a complex constant, a and p are respectively the real part and squared magnitude of the resonant poles. The resonant frequency is given by

$$f_r = \frac{1}{2\pi}\sqrt{\beta - \alpha^2}$$

Taking a and p and the real and imaginary part of c as the parameters to be estimated, one can setup an RLS algorithm with 4 unknowns (instead of 8) with the following equation,

$$y := \omega^2 \begin{pmatrix} r_r(\omega) \\ r_i(\omega) \end{pmatrix} = \begin{pmatrix} 2\omega r_i & r_r & -1 & 0 \\ -2\omega r_r & r_i & 0 & -1 \end{pmatrix} x = :H(\omega)x$$

Where rr and ri are the real and imaginary parts of the I-over-V ratio at each frequency, and $x$ is the parameters to be estimated,

$$x := (\alpha \quad \beta \quad real(c) \quad imag(c))^T.$$

Comparing the above formulation for RLS with the one in the previous section shows that:

1. The frequency scaling issue, i.e. the 4th and 3rd orders of ω, no longer exists in this case.
2. The parameter space is now 4 dimensional, rather than 8, leading to a faster computation.
3. The frequency sweeps in a limited range only around the resonance.

These facts make the estimation process more robust and computationally less expensive.

The frequency interval of 200 Hz within the resonant frequency range of 280 Hz to 480 Hz is now considered.

The simulation is performed for different values of resonant frequencies, from approximately 290Hz up to 440Hz, still in the assumed frequency interval. Fig. 6b illustrates the resonant frequency estimation error (relative) versus different values of the resonant frequencies (relative change with respect to the average). According to the plot, with approximately 20% change in the resonant frequency the RLS still can estimate the resonance within 3% error bound.

This written description uses examples to disclose the disclosure, including the best mode, and also to enable any person skilled in the art to practice the described subject-matter, including making and using any apparatus or system. Embodiments described herein provide a method of estimating a dynamical model of a power grid, a method of controlling a grid-connected power converter, a grid-connected power converter and a grid-connected power converter, the estimation in particular enabling reliable and stable operation of the power grid. While various specific embodiments have been disclosed in the foregoing, mutually non-exclusive features of the embodiments described above may be combined with each other. The patentable scope is defined by the claims, and other examples are intended to be within the scope of the claims if they have structural elements that do not differ from the literal language of the claims, or if they include equivalent structural elements with insubstantial differences from the literal language of the claims.

REFERENCE SIGNS

10       power grid / network

12       impedance of the power grid, impedance model

14       power plant / three-phase generator

16       point of common coupling, PCC

18       grid-connected power converter

20       data acquisition unit

22       processor unit / controller

100     method of estimating a dynamical model of a power grid

102     acquiring time domain input data

104     processing the input data

106     determining a characteristic matrix

108     performing a singular value decomposition, SVD

110     representing the dynamical model by a dynamical model function

112     estimating the coefficients of the dynamical model function

120     method of controlling a power grid

122     estimating a dynamical model

124     controlling the power grid

**Claims**

1. A method (100) of estimating a dynamical model of a power grid (10), the method comprising

     a) acquiring (102) time domain input data including electrical signals from the grid (10) during grid (10) operation;
     b) processing (104) the time domain input data, thereby obtaining processed input data from the time domain input data;
     c1) determining (106) a characteristic matrix from the processed input data, the characteristic matrix representing the system dynamics of the grid (10) and having a rank r;

c2) performing (108) a singular value decomposition, SVD, on the characteristic matrix, thereby identifying an order q<r of the dynamical model;

d1) representing (110) the dynamical model by a dynamical model function with a number p of model coefficients being dependent on q; and

d2) estimating (112) the model coefficients of the dynamical model function by means of an adaptive algorithm based on the processed input data.

2. The method (100) according to claim 1, wherein in step b), the processing (104) comprises at least one of:

- Fourier-transforming the time domain input data to frequency domain;
- Filtering, in particular frequency-filtering, the input data, thereby obtaining filtered data, the frequency filtering in particular including removing a fundamental frequency component and/or noise;
- determining at least one frequency interval for frequency domain data analysis and suppressing frequencies outside of the determined at least one frequency interval from the input data;
- After the filtering, Fourier-transforming the input data back from frequency domain to time domain;
- determining the processed input data from the filtered data.

3. The method (100) according to claims 1 or 2, wherein step b) comprises at least one of:

- Processing the input data into the processed input data having a format corresponding to an output of the dynamical model function;
- Fourier-transforming the time domain input data to frequency domain; processing the input data in frequency domain, and Fourier-transforming the processed input data back from frequency domain to time domain.

4. The method (100) according to any preceding claim, wherein step c1) comprises at least one of:

- constructing the characteristic matrix such that its rows and/or columns are mutually shifted, in particular incrementally shifted with respect to each other, and in particular are shifted versions of the processed input data;
- constructing the characteristic matrix as a Hankel matrix.

5. The method (100) according to any preceding claim, wherein step c2) comprises at least one of:

- obtaining singular values of the characteristic matrix, and/or retaining the most significant singular values of the characteristic matrix, and obtaining a truncated matrix based on the retained singular values and having a reduced dimension q<r;
- determining, in particular by means of singular value decomposition, SVD, singular values of the truncated matrix which preferably is obtained from the time domain input data, in order to detect and retain the dominant states and neglect the others.

6. The method (100) according to any preceding claim, wherein step c2) comprises at least one of:

- determining null spaces of the truncated matrix at different frequencies;
- determining, in particular by means of singular value decomposition, SVD, dominant singular values and determining the reduced dimension q as the number of dominant singular values;
- determining, in particular by means of singular value decomposition, SVD, dominant singular values by sorting the singular values according to descending magnitude and applying a cut-off criterion to the sorted singular values;
- determining the dominant singular values by applying a predefined threshold value.

7. The method (100) according to any preceding claim, wherein step d1) comprises at least one of:

- selecting the dynamical model function from a plurality of predetermined candidate dynamical model functions based on the order q and/or on the determined singular values;
- determining the type of grid based on the order q and/or on the determined singular values;
- determining an order $p_1$ of a first polynomial based on q, the dynamical model function including the first polynomial, and the model coefficients including polynomial coefficients of the first polynomial;
- determining an order $p_2$ of a second polynomial based on q, the dynamical model function including the second polynomial, and the model coefficients including polynomial coefficients of the second polynomial, wherein preferably the first polynomial forms a numerator and the second polynomial forms a denominator of the dynamical model function;

- determining the feasibility of the impedance estimation by evaluating whether the number of informative frequencies is sufficient, in particular on the basis of a predefined threshold such as the signal-to-noise ratio and/or the magnitude of the frequency components.

8.  The method (100) according to any preceding claim, wherein step d2) comprises at least one of:

    - estimating the coefficients of the dynamical model function by iteratively updating the model coefficients;
    - estimating the coefficients of the dynamical model function by an optimization method, in particular configured for approaching a minimum of a deviation with respect to the processed input data;
    - estimating the coefficients of the dynamical model function by the adaptive algorithm based on the processed input data.

9.  The method (100) according to any preceding claim, wherein step d2) comprises at least one of:

    - estimating the model coefficients as polynomial coefficients of the dynamical model function;
    - estimating a resonant frequency of the dynamical model function;
    - estimating the model coefficients separately for the real and imaginary parts of the dynamical model function being a complex function.

10. The method (100) according to any preceding claim, wherein the dynamical model function satisfies at least one of:

    - The dynamical model function has a numerator and a denominator, and the model coefficients including numerator and denominator coefficients, wherein preferably the numerator is a first polynomial of order $p_1$ and/or the denominator is a second polynomial of order $p_2$;
    - the dynamical model function represents the relationship between input and output signals of the grid (10), in particular representing the relationship between variations in time between the input and output signals of the grid (10), and in particular representing the relationship at a point of common coupling, PCC;
    - the dynamical model function at a given order q corresponds to a predetermined grid type such as an RL and/or LCL type grid;
    - dynamical model function contains a resonance, in particular a resonance within a predetermined frequency range.

11. The method (100) according to any preceding claim, wherein step d2) comprises at least one of:

    - evaluating the reliability of the estimated order q and/or of the estimated model coefficients based on a condition number of the truncated matrix;
    - determining a confidence interval of the estimated order q and/or of the estimated model coefficients.

12. The method (100) according to any preceding claim, wherein

    step a) comprises acquiring the time domain data at a point of common coupling, PCC, and wherein the method is applied to a plurality of grid-connected power conversion units connected to the PCC.

13. A method (120) of controlling a grid-connected power converter (10), the method comprising;

    - estimating (122) a dynamical model of a power grid (10) by a method (100) according to any preceding claim, and
    - controlling (124) the grid-connected power converter based on the determined dynamical grid model.

14. A grid-connected power converter (18) comprising:

    - a data acquisition unit (20) adapted to acquire (102) time domain input data, including electrical signals from the grid (10) during grid operation; and
    - a processor unit adapted to estimate a dynamical model of the power grid by the method (100) according to any of claims 1 to 12, and

    to control (124) the grid-connected power converter (10) based on the determined dynamical model function (12).

15. The grid-connected power converter (18) according to claim 14, wherein the processor unit includes at least one of the following:

   - a local onboard, preferably embedded controller with the processor unit;
   - a distributed control system with the processor unit comprising a remote processor subunit connected via network.

Fig. 1a

measurements

Estimator

$\hat{Z}_g(s)$

16

TRAFO

Fig. 1b

$I_{pcc}$

16

$Z_{grid}(s)$

$V_g$

$V_{pcc}$

Fig. 1c

EP 4 601 143 A1

Fig. 2a

Fig. 2b

Fig. 2c

Fig. 2d

Fig. 3

Fig. 4a

Fig. 4b

Fig. 5a

Fig. 5b

Fig. 5c

Estimation of R and L

## Fig. 6a

Resonance frequency deviation [%]

## Fig. 6b

Europäisches
Patentamt

European
Patent Office

Office européen
des brevets

# EUROPEAN SEARCH REPORT

**Application Number**

EP 24 15 6871

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ALASSAF ABDULLAH ET AL: "Dynamic Model Identification via Hankel Matrix Fitting: Synchronous Generators and IBRs", 2022 NORTH AMERICAN POWER SYMPOSIUM (NAPS), IEEE, 9 October 2022 (2022-10-09), pages 1-6, XP034276400, DOI: 10.1109/NAPS56150.2022.10012225 [retrieved on 2023-01-16] | 1-12 | INV. H02J3/00 G06Q50/06 H02J13/00 |
| A | * the whole document * | 13-15 | |
| X | CN 115 566 696 A (YUNNAN POWER GRID CO LTD) 3 January 2023 (2023-01-03) | 1-12 | |
| A | * the whole document * | 13-15 | |

**TECHNICAL FIELDS SEARCHED (IPC)**

H02J

The present search report has been drawn up for all claims

| Place of search | Date of completion of the search | Examiner |
|---|---|---|
| Munich | 10 July 2024 | Hartmann, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT**
**ON EUROPEAN PATENT APPLICATION NO.**                    EP 24 15 6871

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2024

| Patent document cited in search report | Publication date | Patent family member(s) | Publication date |
|---|---|---|---|
| CN 115566696 A | 03-01-2023 | NONE | |

EPO FORM P0459

For more details about this annex : see Official Journal of the European Patent Office, No. 12/82